Europäisches Patentamt

European Patent Office

Office européen des brevets

(11) Publication number: **0 231 589**
**A1**

## (12) EUROPEAN PATENT APPLICATION

(21) Application number: **86308133.7**

(22) Date of filing: **20.10.86**

(51) Int. Cl.⁴: **B23P 11/00**

(30) Priority: **07.02.86 GB 8603047**

(43) Date of publication of application:
**12.08.87 Bulletin 87/33**

(84) Designated Contracting States:
**CH DE FR GB IT LI NL**

(71) Applicant: **James Burn International Limited**
**Douglas Road**
**Esher Surrey KT10 8BD(GB)**

(72) Inventor: **Jones, Leonard William Norton**
**83 Westbury Road**
**New Malden Surrey(GB)**

(74) Representative: **Allen, Oliver John Richard et al**
**Lloyd Wise, Tregear & Co. Norman House**
**105-109 Strand**
**London, WC2R 0AE(GB)**

(54) Device for securing the core of spools to two flanges.

(57) A device for securing the core (42) of a spool - (44) to its two flanges (46), having a main body (12) portion housing a plurality of punching elements - (18), said elements being operable to move radially outward and at least partly beyond the outer surface of the main body (12).

Fig. 6.

EP 0 231 589 A1

The invention relates to a device for securing the core of spools to two flanges.

At present, two flanges of a spool are secured to the core by adhesive. Such is relatively expensive and time consuming.

In accordance with the invention, a device for securing the core of spools to two flanges comprises a main body portion housing a plurality of punching elements, said elements being operable to move radially outward and at least partly beyond the outer surface of the main body.

Preferably, the punching elements have a pointed outer end and a blunt inner end. Suitably, four punching elements are provided symmetrically arranged about the longitudinal axis of the punching device.

The punching element may be biased by means of a spring. Suitably, the spring engages the punching element by means of a ledge, and is supported within the body portion by a bush. The bush is preferably secured to the body portion by a pin member.

The outer end of the punching elements are in use suitably moved radially outwardly from the outer surface of the main body by a distance corresponding to the distance that the inner end of the punching members protrude within the central bore of the body portion.

The advantages of such a device are that the two flanges of a spool can be firstly secured and secondly centrally positioned relative to the core of the spool.

The invention will now be described, by way of example, with reference to the accompanying drawings, in which:

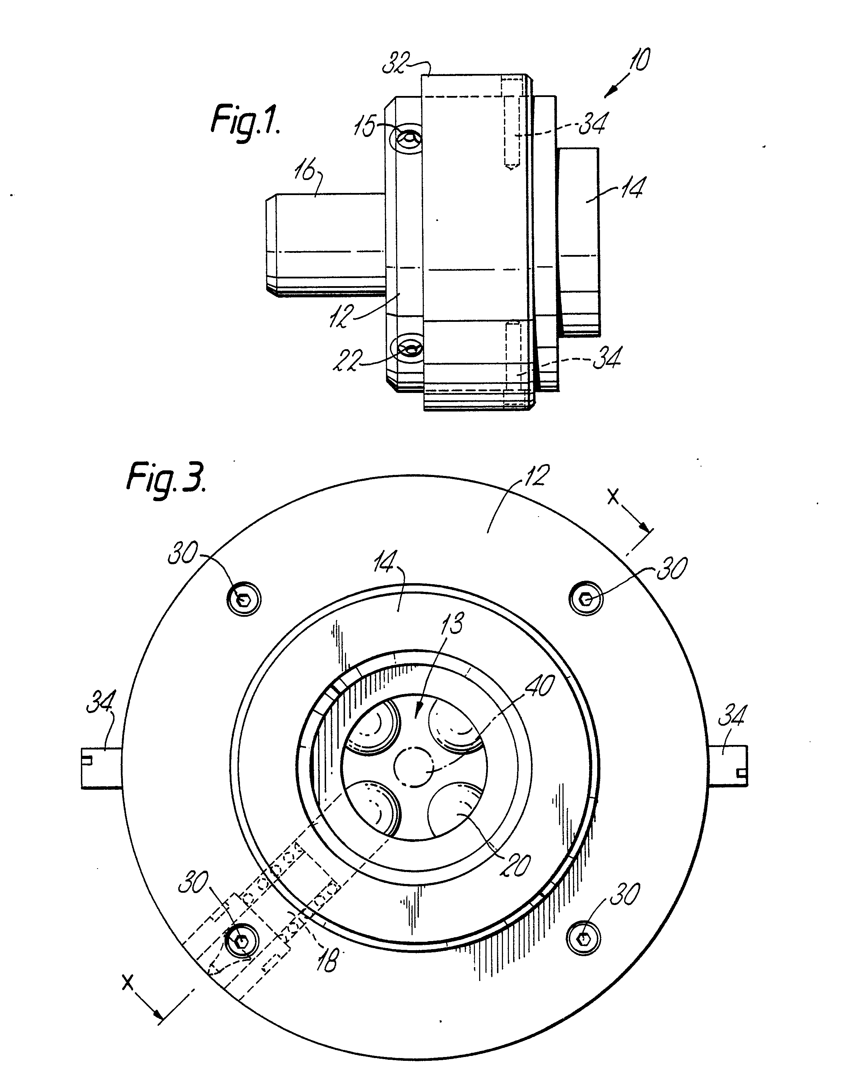

Figure 1 is a plan view of a punching device in accordance with the invention, in an inoperative position,

Figure 2 is a rear view of the punching device shown in Figure 1, in an operative position,

Figure 3 is an enlarged rear view of the punching device shown in Figure 1, in the inoperative position and with the adjustable ring removed,

Figure 4 is an enlarged cross-sectional view of the punching device of Figure 1 as taken along line X-X in Figure 3,

Figure 5 is a side view of the adjusting ring portion of the device as shown in Figure 1, and

Figure 6 is a cross-sectional side view of the punching device of Figure 1 shown securing the core of a spool to its flange.

The punching, staking or stabbing device 10 shown in the drawings has a main body 12 with a central bore 13, a rear extension 14 and a front extension 16. Within four radial bores 15 provided symmetrically about the longitudinal axis 17 of the bore 13 and within the main body 12, securing means in the form of a punching member 18 are provided.

The punching members 18 each comprise a rounded inner engaging portion 20 and an outer pointed hub punch portion 22, the punching members 18 each being biased inwardly by a spring 24. The springs 24 are biased at one end against the punching members 18 via a ledge 26 forming part of the engaging portion 20, and the springs 24 are mounted at their other end against a bush 28 which is secured to the main body 12 by a pin member 30.

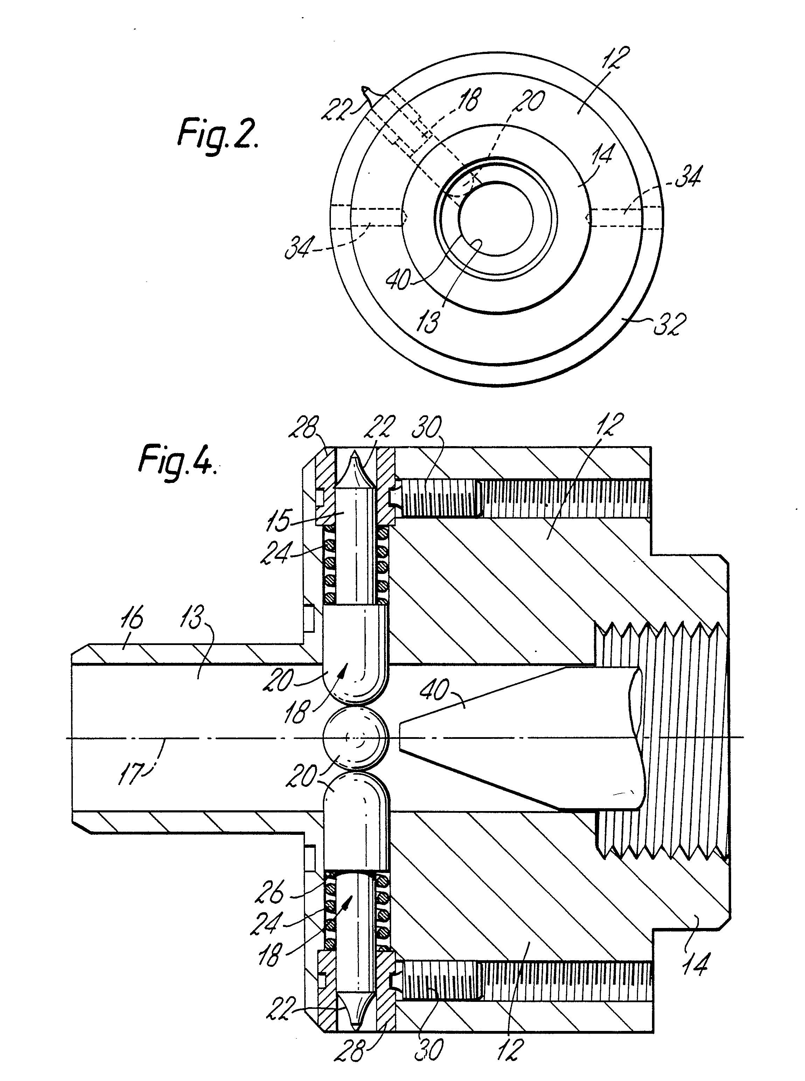

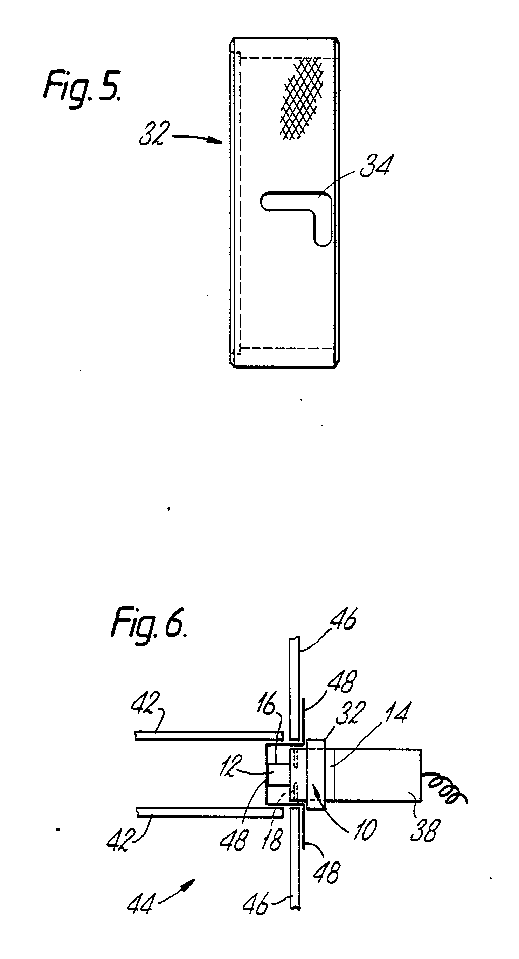

In Figure 6, the punching device 10 is shown having a power source 38 screwed on the rear extension 14. The power source 38 which is one of any linear movement, has a tapered nose front extension 40 (see Figure 4) positioned within the central bore 13, which power source moves the nose 40 between a retracted position wherein the nose is not in engagement with the punching members 18, and an extended position wherein the nose is in engagement with the punching members 18.

In particular, the nose 40 in the extended position engages the rounded inner engaging portion 20 of the four punching members 18, the engagement of the tapering surface of the nose with the four portions 20 causing the punching members 18 to move radially outwardly beyond the outer surface of the main body 12 (see Figure 2), whereby the outer pointed hub punch portions 22 embed themselves into the bore of the component positioned around the main body 12.

In Figure 6, the punching device 10 is shown securing a core 42 to a flange 46 by means of a cup 48, to form a spool 44. In particular, the device 10 is shown inserted in the cup 48 such that the punching members 18 in operation embed themselves into the side of the cup whereby the cup is partly deformed into the flange 46. Thereafter, the punching members 18 are re-operated to embed themselves into the side of the cup whereby the cup is partly deformed into the core 42.

Around the main body 12, an adjustable ring 32 is provided, the ring 32 being connected to the body 12 by means of two heel pin members 34 within the body 12 co-operating with two right-angled slots 36 provided in the ring 32 (see Figure 5). The slots 36 are right-angled whereby the ring can be held on the main body to engage against the cup 48 in either of two positions which correspond firstly to the punching members 18 deforming the side of the cup 48 into the flange 46, and secondly to the punching members 18 deforming the side of the cup 48 into the core 42.

The diameter of the outer surface of the main body 12 of the device 10 is provided to be slightly less than the inner diameter of the cup of the spool to be assembled, while the length of the front extension 16 of the device 10, is varied according to the depth of the cup of the spool to be assembled.

The length of linear movement and angle of taper of the nose 40 can be varied to obtain different penetration of the punching elements 18.

The advantages of the device are that the two flanges of a spool can be firstly secured and secondly centrally positioned relative to the core of the spool.

## Claims

1. A device for securing the core of a spool to its two flanges, having a main body portion housing a plurality of punching elements, said elements being operable to move radially outward and at least partly beyond the outer surface of the main body.

2. A device as claimed in claim 1 wherein the punching elements have a pointed outer end and a blunt inner end.

3. A device as claimed in either claim 1 or 2 wherein a plurality of punching elements are provided symmetrically arranged about the longitudinal axis of the device.

4. A device as claimed in any preceding claim wherein the punching elements are biased by means of a spring.

5. A device as claimed in any preceding claim wherein the outer end of the punching elements when operated are moved radially outwardly from the outer surface of the main body by a distance corresponding to the distance that the inner end of the punching elements protrude within the central bore of the body portion.

6. A device as claimed in any preceding claim inclluding engagement means within the central bore of the body portion, the engaging means when operated contacting the inner end of the punching elements simultaneously to cause outward radial movement thereof.

7. A device as claimed in claim 6 wherein the engagement means is situated along the longitudinal axis of the punching device.

8. A device as claimed in either claim 6 or 7 wherein the engagement means includes a tapered nose portion.

9. A device as claimed in any preceding claim wherein spacing means are provided on the main body portion a set distance away from the outer end of the punching elements.

10. A device as claimed in claim 9 wherein the set distance of the spacing means is adjustable.

**Fig.1.**

**Fig.3.**

Fig.2.

Fig.4.

*Fig. 5.*

32 →

34

*Fig. 6.*

46

42

16

48

32

14

12

48

18

10

38

44 →

46

48

## DOCUMENTS CONSIDERED TO BE RELEVANT

EP 86308133.7

| Category | Citation of document with indication, where appropriate, of relevant passages | Relevant to claim | CLASSIFICATION OF THE APPLICATION (Int. Cl 4) |
|---|---|---|---|
| Y | <u>FR - A1 - 2 477 124</u> (ROMAYER) <br> * Page 3, lines 21-36; fig. 4 * <br> -- | 1-4,6-9 | B 23 P 11/00 |
| Y | <u>FR - A - 1 343 729</u> (GUBRI) <br> * Page 2, right column, last but one paragraph; claim; fig. 6-8 * <br> -- | 1-4,6-9 | |
| Y | <u>US - A - 1 057 664</u> (PATTERSON) <br> * Claims 1,2; fig. 1-3 * <br> -- | 1-4,6-9 | |
| A | <u>AT - B - 105 563</u> (HOLEY) <br> * Page 1, lines 21-30; fig. 1,2 * <br> -- | 1,2,4-6 | |
| A | <u>AT - B - 100 181</u> (SONNLEITNER) <br> * Page 1, line 40 - page 2, line 4; fig. 1-4 * <br> ---- | 1,2,5-6 | TECHNICAL FIELDS SEARCHED (Int. Cl 4) <br><br> B 21 D 31/00 <br> B 21 D 39/00 <br> B 23 P 11/00 <br> B 65 H 75/00 |

The present search report has been drawn up for all claims

| Place of search | Date of completion of the search | Examiner |
|---|---|---|
| VIENNA | 24-03-1987 | BISTRICH |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82